# EUROPEAN PATENT SPECIFICATION

(11) **EP 0 570 785 B1**
(45) Date of publication and mention of the grant of the patent: **01.10.1997**
(21) Application number: 93107503.0
(22) Date of filing: 08.05.1993
(51) Int. Cl.: H04N 7/16

(54) **Method and apparatus for device control by data transmission in TV lines**
Verfahren und Einrichtung zur Gerätesteuerung mit Datenübertragung in Fernsehzeilen
Méthode et appareil de commande de dispositifs avec transmission de données dans des lignes de télévision

(30) Priority: 19.05.1992 EP 92401364
(43) Date of publication of application: 24.11.1993
(73) Proprietor: THOMSON multimedia, 92400 Courbevoie (FR)
(72) Inventor: Diehl, Eric, F-67100 Strasbourg (FR); Hamon, Joel, F-67640 Lipsheim (FR)
(74) Representative: Hartnack, Wolfgang, Dipl.-Ing.

(56) References cited:
- EP-A- 0 098 226
- EP-A- 0 243 312
- WO-A-88/01463
- WO-A-91/03127
- BBC RESEARCH DEPARTMENT REPORT no. 10, August 1988, TADWORTH,SURREY,GR.BRITAIN pages 1 - 18 D.T.WRIGHT.C.ENG.,M.I.E.E. 'CONDITIONAL ACCESS BROADCASTING: DATACARE 2'

## Description

The present invention relates to a method and to an apparatus for device control by data transmission in TV lines.

### Background

With new generation PAY TV systems using a control access system based on smart card processing, the PAY TV decoder has lost its identity. This means that all the data are addressed to a given address which belongs to the smart card and not to the decoder. These systems offer a detachable control access but loose the geographical information.

In the international patent application WO-A-91 03 127 a process for transmission and automatic reception of data signals in a TV signal is described.
Therein, a method for compatible transmission of additional non-cyclically data signals in a videotext data stream is disclosed. Such data signals carry additional information data like an extended character table including special characters or software data for remote programming of personal computers. The additional data signals are summarised to fill a so called "Teletext special purpose page" and this page is transmitted like a "normal Teletext page" non-cyclically between two successive "normal Teletext pages". The receiver holds pre-programmed identifiers for some "special purpose Teletext pages" and evaluates only those pages which carry one of the pre-programmed identifiers.

### Invention

It is one object of the invention to disclose a method which enables addressing of a given decoder in a defined geographic location. This object is reached by the method disclosed in claim 1.

The invention gives a flexible solution in order to carry data for control access based on both, smart card and decoder, for PAY TV systems on PAL, SECAM and NTSC. The information, such as listed below, is down loaded via the transmission channel:
- specific channel allocation table;
- data related to the VTR of the customer. (Using a smart card may be dangerous if used without care. The card may corrupt the data of another decoder);
- messages related to a geographic location.

To carry the data the invention uses two sets of n video lines which represent two independent data channels: channel 1 with lines M₁ M₂...Mₙ and channel 2 with lines 0₁ 0₂...0ₙ. The data format on both data channels is identical. The data carried by the data channels are organised packets. Each packet contains two types of information: descriptor data and application data. In a receiver the data are extracted from the video lines by a processor unit called data dispatcher. The data dispatcher extracts the bit stream and may perform error correction algorithms independently for the two data channels. After receiving a packet from one data channel the data dispatcher analyses the descriptor data which contain information describing the target. According to this information, the data dispatcher transmits the application data contained in the packet without analysing them to the correct processor unit: either control access processor (CAP) or decoder intelligent processor (DIP).
By that means, the PAY TV system has two independent data channels where one can be dedicated to the control access system based on the smart card and the other dedicated to the decoder. Furthermore the allocation of one data channel to one process can be changed at any time because the data dispatcher analyses in real time the addresses of one packet. At one moment, the two data channels could be dedicated to the DIP or to the CAP.

The inventive method is set out in claim 1 and, in general terms, consists of a device control by data transmission in TV lines, wherein two or more groups of one or more lines each contain packets of digital data, wherein each packet contains descriptor data and application data and the descriptor data are used in a data dispatcher to direct the related application data to a separate device in which the respective application data are evaluated.

Advantageous additional embodiments of the inventive method result from the respective dependent claims.

It is a further object of the invention to disclose an apparatus which utilises the inventive method. This object is reached by the apparatus disclosed in claim 5.

### Drawings

Preferred embodiments of the invention are described with reference to the accompanying drawings, which show in:
- Fig. 1: principle of the invention;
- Fig. 2: block diagram of the inventive apparatus.

### Preferred embodiments

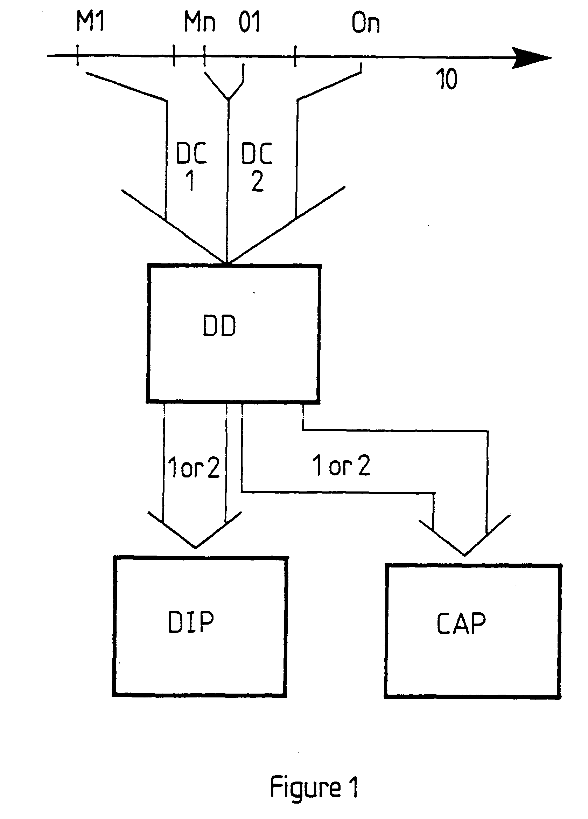

In Fig. 1 the video lines M₁...Mₙ of a first data channel DC1 and the video lines 0₁...0ₙ of a second data channel DC2 are arranged on a time axis 10. The descriptor data of these channels are evaluated in data dispatcher DD which directs the application data of the packets to a DIP or to a CAP accordingly. The data dispatcher DD, the DIP and the CAP can be made from different processors or from one single processor on which run respective different processes.
This system may be extended to more than two data channels and more than two target processor units. The number of data channels can be different from the number of target processor units but there should still be only one data dispatcher.

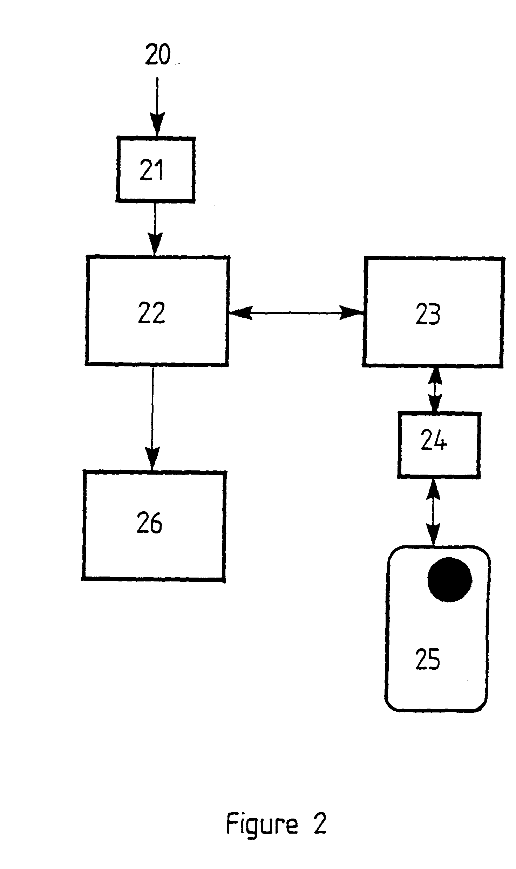

Advantageously the invention can be applied to a VIDEOCRYPT pay TV system. Fig. 2 shows the architecture of such a device. In this device, a bit stream is extracted from the video lines 20 by a known data extractor 21 which forms the data channels. The respective data is passed to a data dispatcher 22. The data dispatcher extracts the data from the two data channels. According to a parameter value of the descriptor data, called header, the data dispatcher will send the application data:
- either to the DIP 26 in a pay TV decoder;
- or to a VIDEOCRYPT verifier 23. This verifier sends through a smart card reader 24 the respective conditional access data to a smart card 25 which is the kernel of the control access system. If the customer is entitled, the smart card returns to the data dispatcher 22 via the VIDEOCRYPT verifier 23 the required information for enabling the video signal descrambling.

The data dispatcher may also manage the video descrambling. Also the features related to the decoder are handled by the decoder intelligent processor DIP.

## Claims

1. Method for device control by data transmission in TV lines, wherein two or more groups of one or more TV lines each contain packets of digital data, **characterised in that,** each packet of digital data contains descriptor data which contain information describing as a target either a smart card processor (25) or a pay TV decoder processor (DIP), that the descriptor data are used in a data dispatcher (DD, 22) to direct the related application data to either the pay TV decoder processor (DIP, 26) or through a smart card interface processor (23) and a smart card reader (24) to a smart card processor (25).

2. Method according to claim 1, wherein said video lines are located in the vertical blanking period.

3. Method according to any of claims 1 to 2, wherein all of said groups of lines have the same data format.

4. Method according to any of claims 1 to 3, wherein said data dispatcher (DD; 22) switches in real time.

5. Apparatus for a method according to any of claims 1 to 4, comprising a data extractor (21) which extracts a bit stream from video lines (20) and forms said digital data packets which are passed to a data dispatcher (22), **characterised in that,** this data dispatcher (22) sends according to said descriptor data said application data either to a processor (26) in a pay TV decoder or through a smart card interface processor (23) and a smart card reader (24) to a smart card processor (25).

## Patentansprüche

1. Verfahren für eine Gerätesteuerung durch Datenübertragung in Fernsehzeilen, bei dem zwei oder mehrere Gruppen von ein oder mehreren Fernsehzeilen je Pakete mit digitalen Daten enthalten,
**dadurch gekennzeichnet,** daß
jedes Paket von digitalen Daten beschreibende Daten enthält, die Informationen enthalten, die als ein Ziel entweder einen smart card-Prozessor (25) oder einen Gebührenfernseh-Dekoder-Prozessor (DIP) beschreiben, daß die beschreibenden Daten in einem Datendispatcher (DD, 22) dazu verwendet werden, die jeweiligen anwendungsbezogenen Daten entweder dem Gebührenfernseh-Dekoder-Prozessor (DIP, 26) oder über einen smart card-interface-Prozessor (23) und einen smart card-Leser (24) einem smart card-Prozessor (25) zuzuführen.

2. Verfahren nach Anspruch 1, bei dem die Videozeilen in der vertikalen Austastlücke enthalten sind.

3. Verfahren nach einem der Ansprüche 1-2, bei dem alle Gruppen von Zeilen dasselbe Datenformat aufweisen.

4. Verfahren nach einem der Ansprüche 1-3, bei dem der Datendispatcher (DD; 22) in Echtzeit schaltet.

5. Einrichtung für ein Verfahren nach einem der Ansprüche 1-4, enthaltend einen Daten- Extrahierer (21), der einen Datenstrom von den Videozeilen (20) abtrennt und die digitalen Datenpakete bildet, die dem Datendispatcher (22) zugeführt werden,
**dadurch gekennzeichnet,** daß
der Datendispatcher (22) die anwendungsbezogenen Daten entsprechend den beschreibenden Daten entweder an einen Prozessor (26) in einem Gebührenfernseh-Dekoder oder über einen smart card-interface-Prozessor (23) und einen smart card-Leser (24) an einen smart card-Prozessor (25) sendet.

## Revendications

1. Procédé de commande de dispositif par transmission de données dans des lignes de télévision, dans lequel deux groupes ou plus d'une ligne de télévision ou plus contiennent chacun des paquets de données numériques, caractérisé en ce que, chaque paquet de données numériques contient des données de description qui contiennent des informations décrivant comme cible soit un processeur de carte à mémoire (25) soit un processeur de décodeur de télévision payante (DIP), en ce que les données de description sont utilisées dans un distributeur de données (DD, 22) pour diriger les données d'application associées soit vers le processeur de décodeur de télévision payante (DIP, 26) soit à travers un processeur d'interface de carte à mémoire (23) et un lecteur de carte à mémoire (24) vers un processeur de carte à mémoire (25).

2. Procédé selon la revendication 1, dans lequel lesdites lignes vidéo sont situées dans la période de suppression de trame.

3. Procédé selon l'une quelconque des revendications 1 à 2, dans lequel tous lesdits groupes de lignes ont le même format de données.

4. Procédé selon l'une quelconque des revendications 1 à 3, dans lequel ledit distributeur de données (DD; 22) commute en temps réel.

5. Dispositif pour un procédé selon l'une quelconque des revendications 1 à 4, comprenant un extracteur de données (21) qui extrait un train binaire de lignes vidéo (20) et forme lesdits paquets de données numériques qui sont passés à un distributeur de données (22), caractérisé en ce que, cet extracteur de données (22) envoie conformément auxdites données de description lesdites données d'application soit vers un processeur (26) dans un décodeur de télévision payante soit à travers un processeur d'interface de carte à mémoire (23) et un lecteur de carte à mémoire (24) vers un processeur de carte à mémoire (25).
